# EUROPÄISCHE PATENTSCHRIFT

(11) **EP 2 454 501 B1**
(45) Veröffentlichungstag und Bekanntmachung des Hinweises auf die Patenterteilung: **25.02.2015**
(21) Anmeldenummer: 10722713.4
(22) Anmeldetag: 09.06.2010
(51) Int. Cl.: F16D 25/0638, F16D 25/10

(54) **KUPPLUNGSANORDNUNG**
COUPLING ARRANGEMENT
DISPOSITIF D'ACCOUPLEMENT

(30) Priorität: 15.07.2009 DE 102009027716
(43) Veröffentlichungstag der Anmeldung: 23.05.2012
(73) Patentinhaber: ZF Friedrichshafen AG, 88038 Friedrichshafen (DE)
(72) Erfinder: SCHMITZ, Ewald, 88718 Daisendorf (DE)
(86) Internationale Anmeldenummer: PCT/EP2010/058053
(87) Internationale Veröffentlichungsnummer: WO 2011/006713

(56) Entgegenhaltungen:
- DE-A1- 10 256 023
- FR-A5- 2 120 472
- GB-A- 868 091
- GB-A- 910 162
- US-A- 3 566 707
- US-A- 4 664 242

## Beschreibung

Die vorliegende Erfindung betrifft eine Kupplungsanordnung gemäß dem Oberbegriff des Die FR 2120475 A5 offenbart eine solche Kupplungsanordnung.

Beispielsweise beim Betrieb von Druckmaschinen ist es vorteilhaft, in verschiedenen Betriebs- und Rüstphasen bestimmte Walzen, beispielsweise die Walzen eines Feuchtwerkes einer Druckmaschine mit unterschiedlichen Umfangsgeschwindigkeiten anzutreiben. Aus der Praxis der Anmelderin sind dazu Druckmaschinen bekannt, deren Walzen eines Feuchtwerkes wahlweise mit einer von zwei vorgegebenen Übersetzungen über einen Antriebsstrang angetrieben werden.

Ein solcher Antriebsstrang umfasst typischerweise mindestens eine Stirnradstufe. Dabei wird die gewünschte Übersetzung beispielsweise mittels einer Kupplungsanordnung ausgewählt, indem jeweils eines von zwei, um eine Abtriebswelle rotierenden Losrädern drehfest mit der Abtriebswelle verbunden wird. Beide Losräder sind antriebsseitig dauernd über den Antriebsstrang mit einem Antriebsmotor wirkverbunden. Die bekannte Kupplungsanordnung ist pneumatisch betätigbar und derart ausgebildet, dass die Walze im drucklosen Zustand der Kupplungsanordnung über eine erste Kupplung und über das erste Losrad mit einer ersten Übersetzung angetrieben wird, und dass die Walze bei Druckbeaufschlagung der Kupplungsanordnung über eine zweite Kupplung und über das zweite Losrad mit einer zweiten Übersetzung angetrieben wird. Zur Erzielung unterschiedlicher Übersetzungen weisen die beiden Losräder unterschiedliche Durchmesser auf. Jedes Losrad ist mit den Außenlamellen der ihm zugeordneten Kupplung drehfest verbunden, während die Innenlamellen jeder Kupplung drehfest mit der Abtriebswelle verbunden sind. Bei dieser Kupplungsanordnung sind also genau zwei Schaltstellungen möglich, in denen jeweils eine drehmomentübertragende Verbindung zwischen dem Antriebsmotor und der Walze besteht.

Es ist die Aufgabe der vorliegenden Erfindung eine eingangs beschriebene Kupplungsanordnung so weiterzubilden, dass zusätzlich zu den bestehenden Schaltstellungen eine weitere Schaltstellung schaltbar ist. Dabei soll der Bauaufwand und der benötigte Bauraum möglichst gering gehalten werden. Ebenso soll eine Druckmaschine mit einer derartigen Kupplungsanordnung geschaffen werden.

Diese Aufgabe wird durch eine Kupplungsanordnung gemäß Patentanspruch 1 und durch eine Druckmaschine gemäß Patentanspruch 9 gelöst. Die abhängigen Ansprüche beinhalten bevorzugte Weiterbildungen der Erfindung.

Demnach weist die erfindungsgemäße Kupplungsanordnung ein erstes und ein zweites Losrad auf, die beide rotierbar um eine Abtriebswelle angeordnet sind, wobei wahlweise jeweils eines der beiden Losräder mittels einer ersten bzw. zweiten Kupplung drehfest mit einer Abtriebswelle verbunden werden kann. Die beiden Kupplungen sind mittels einer druckmittelbeaufschlagbaren Kolben-Zylinder-Einheit betätigbar. Der Kolben der Kolben-Zylindereinheit ist erfindungsgemäß als Stufenkolben ausgebildet. Als Stufenkolben wird ein Kolben verstanden, der mehrteilig aufgebaut ist und dadurch abhängig von der Druckbeaufschlagung mehrere vorbestimmbare Betätigungshübe nacheinander auslösen kann. Die einzelnen Betätigungshübe können sich in Richtung und Größe unterscheiden.

Die Abtriebswelle kann beispielsweise direkt und starr an einer Walze angeordnet sein, beispielsweise an einer Feuchtwalze einer Druckmaschine, oder die Walze wird über weitere Getriebestufen angetrieben.

Mit einer derartigen Kupplungsanordnung können über die beiden, über den Antriebsstrang mit einem Antriebsmotor wirkverbundenen Losräder zwei verschiedene Übersetzungen und damit Umfangsgeschwindigkeiten der angetriebenen Walze realisiert werden, wenn die Kolben-Zylindereinheit in ihren beiden Endstellungen steht. Zusätzlich ist durch den Stufenkolben eine mittlere Schaltstellung einschaltbar, in der beide Kupplungen geöffnet sind und keine drehmomentübertragende Verbindung zwischen dem Antrieb und der Abtriebswelle, also der Walze besteht. So sind auch mit einem nur einseitig druckmittelbeaufschlagbaren Kolben drei Schaltstellungen möglich, wenn der Kolben in die Gegenrichtung durch eine Feder vorgespannt ist. Gegenüber einer doppelseitig beaufschlagbaren Kolben-Zylindereinheit sind der bauliche Aufwand und der Steuerungsaufwand gering. So erfordert die einseitig druckmittelbeaufschlagbare Kolben-Zylindereinheit beispielsweise nur einen Druckraum, der entsprechend abgedichtet werden muss. Weiterhin muss nur ein Druckluftanschluss an die rotierende Welle angebracht werden.

Erfindungsgemäss weist der Stufenkolben einen axial fest mit der Abtriebswelle verbundenen Festkolben und einen axial verschiebbaren Schleppkolben auf, während der Zylinder der Kolben-Zylindereinheit gegenüber der Abtriebswelle vorzugsweise axial verschiebbar angeordnet ist. Die beiden Kupplungen sind jeweils derart mit dem Zylinder wirkverbunden, dass der axial verschiebbare Zylinder in jeder der beiden Endstellungen jeweils eine der beiden Kupplungen schließt, sodass über die jeweils geschlossene Kupplung und das ihr zugeordnete Losrad das Antriebsdrehmoment auf die Abtriebswelle und weiter auf die Walze übertragen wird.

Eine erste Endstellung nimmt der Zylinder dann ein, wenn die Kolben-Zylindereinheit nicht mit Druck beaufschlagt ist und der Zylinder von einer Feder, beispielsweise einer oder mehrerer Schraubendruckfedern, in die erste Endstellung gedrückt wird. Die Feder kann sich vorzugsweise an dem axial feststehenden Festkolben abstützen. In der ersten Endstellung des Zylinders ist die erste Kupplung geschlossen, sie überträgt also ein erstes antriebsseitig zugeführtes Drehmoment von dem ersten Losrad auf die Abtriebswelle. Die zweite Kupplung ist in der ersten Endstellung geöffnet und kann kein Drehmoment übertragen.

Eine zweite, gegenüberliegende Endstellung nimmt der Zylinder ein, wenn die Kolben-Zylindereinheit mit hohem Druck beaufschlagt ist. In der zweiten Endstellung des Zylinders ist die zweite Kupplung geschlossen und überträgt ein zweites antriebsseitig zugeführtes Drehmoment auf die Abtriebswelle. Die erste Kupplung ist in der zweiten Endstellung geöffnet und überträgt kein Drehmoment.

Die mittlere Schaltstellung, bei der die Kupplungsanordnung kein Drehmoment überträgt, nimmt der Zylinder dann ein, wenn die Kolben-Zylindereinheit mit einem niedrigen Druck beaufschlagt wird. Der niedrige Druck muss zumindest so groß sein, dass die resultierende Druckkraft die Federkraft der oben beschriebenen Feder übersteigt, sodass der Zylinder entgegen der Federkraft aus der ersten Endstellung soweit herausbewegt wird, bis er an dem Schleppkolben ansteht. In diesem Zustand kann der Druck um einen bestimmten weiteren Betrag erhöht werden, ohne dass der Zylinder sich weiter bewegt. Der niedrige Druck darf jedoch nicht so groß sein, dass der Zylinder unter Mitnahme des Schleppkolbens in die zweite Endstellung gedrückt wird.

Die Kolben-Zylindereinheit ist bevorzugt ringförmig ausgebildet und koaxial zur Abtriebswelle angeordnet. So kann die Kolben-Zylindereinheit vorteilhaft zwischen den beiden Losrädern auf der Abtriebswelle angeordnet werden, wodurch der benötigte Bauraum optimal ausgenutzt wird.

Vorzugsweise sind der Festkolben und der Schleppkolben jeweils als Ringkolben ausgebildet, wobei der Festkolben im inneren Bereich des Ringkolbens und der Schleppkolben außen angeordnet ist. Der Schleppkolben ist dabei sowohl gegenüber dem Festkolben, als auch gegenüber dem Zylinder axial verschiebbar angeordnet.

Gemäß einer anderen bevorzugten Ausgestaltung der Kupplungsanordnung ist der Festkolben als Ringkolben ausgebildet und der Schleppkolben besteht aus mehreren über den Umfang des Festkolbens verteilt angeordneten Einzelkolben, die gegenüber dem Festkolben axial verschiebbar angeordnet sind.

Eine weitere bevorzugte Ausführungsform der Erfindung sieht vor, dass das Druckmittel der Kolben-Zylindereinheit durch zumindest eine Bohrung in der Abtriebswelle zugeführt wird. Dadurch wird weiterer Bauraum gespart und auf weitere separate Leitungen und Anschlusselemente zur Druckmittelzufuhr kann verzichtet werden.

Die genannten Kupplungen sind bevorzugt so ausgebildet, dass jede Kupplung zumindest eine drehfest mit dem jeweils zugeordneten Losrad verbundene Außenlamelle und zumindest eine drehfest mit der Abtriebswelle verbundene Innenlamelle auf einem Lamellenring aufweist. In den beiden Endstellungen des Zylinders wird jeweils eine Kupplung von dem Zylinder so beaufschlagt, dass die entsprechende Außenlamelle drehmomentübertragend mit der dazugehörigen Innenlamelle verbunden ist. Vorzugsweise ist jede Kupplung als Mehrscheibenreibkupplung mit mehreren Außen- und Innenlamellen ausgebildet, die von dem Zylinder in der entsprechenden Endstellung aneinander gedrückt werden.

Schließlich betrifft die vorliegende Erfindung eine Druckmaschine mit einem Feuchtwerkgetriebe, das eine oben beschriebene Kupplungsanordnung aufweist.

Die Erfindung wird anhand eines bevorzugten Ausführungsbeispieles, das in den nachfolgenden Figuren dargestellt ist, näher erläutert.

Die Figuren zeigen,
- Fig. 1: eine Kupplungsanordnung aus dem Stand der Technik mit zwei Schaltstellungen,
- Fig. 2: ein erstes Ausführungsbeispiel der erfindungsgemäßen Kupplungsanordnung mit einem Ringkolben als Schleppkolben und
- Fig. 3: ein zweites Ausführungsbeispiel der erfindungsgemäßen Kupplungsanordnung mit mehreren Einzelschleppkolben.

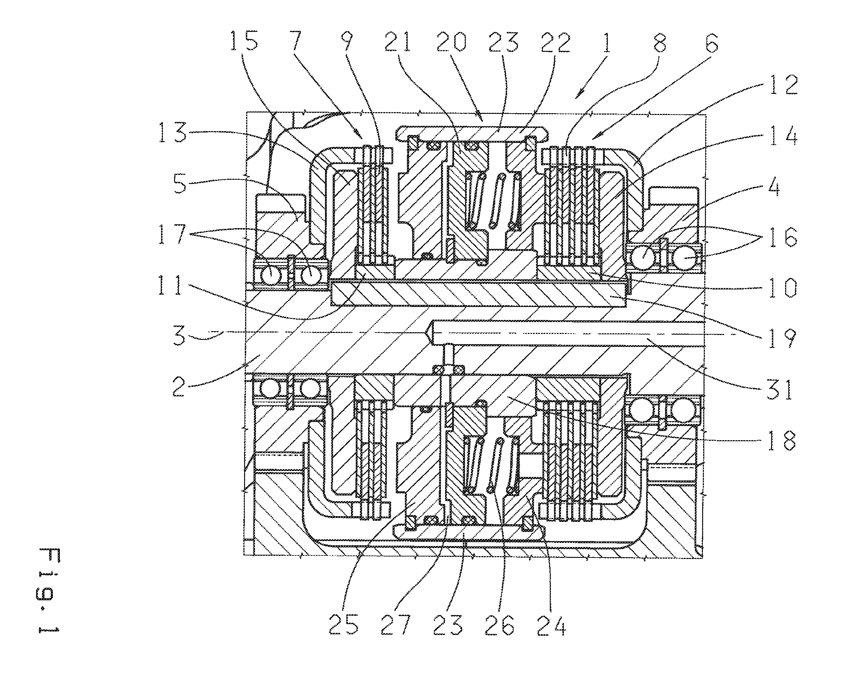

Bei der in Fig. 1 dargestellten Kupplungsanordnung 1 aus dem Stand der Technik sind, wie auch bei der erfindungsgemäßen Kupplungsanordnung, die wesentlichen Bauteile entweder fest auf der Abtriebswelle 2 oder rotierbar um deren Mittelachse 3 angeordnet.

Zur Kupplungsanordnung 1 gehört ein erstes Losrad 4 und ein zweites Losrad 5, denen jeweils eine daneben angeordnete erstes Kupplung 6 bzw. eine zweite Kupplung 7 zugeordnet ist. Beide Losräder 4 und 5 sind auf der Abtriebswelle 2 mittels Wälzlagern 16 und 17 drehbar gelagert und beide Losräder sind in diesem Ausführungsbeispiel als Zahnräder ausgeführt. In axialer Richtung ist zwischen den beiden Kupplungen 6 und 7 eine Kolben-Zylindereinheit 20 angeordnet, wobei der Kolben 21 starr mit der Abtriebswelle 2 und der Zylinder 22 axial verschiebbar zur Abtriebswelle angeordnet sind.

Jede Kupplung 6, 7 besteht aus Außenlamellen 8, 9 und aus dem Lamellenring 10, 11 mit fest angeordneten Innenlamellen. In diesem Ausführungsbeispiel ist jede Kupplung 6, 7 als Mehrscheibenreibkupplung ausgebildet, sodass sich die Außenlamellen 8, 9 und die Innenlamellen der Lamellenringe 10, 11 in axialer Richtung abwechselnd hintereinander angeordnet gegenüberstehen. Die Außenlamellen 8, 9 der ersten und der zweiten Kupplung 6 und 7 sind durch je einen Lamellenmitnehmer 12 bzw. 13 drehfest mit dem jeweils zugeordneten Losrad 4 bzw. 5 verbunden und in axialer Richtung verschiebbar angeordnet.

Die Innenlamellen der Lamellenringe 10 und 11 sind drehfest mit der Abtriebswelle 2 verbunden und ebenfalls in axialer Richtung verschiebbar angeordnet. Die Lamellenringe 10 und 11 weisen des Weiteren je eine Druckplatte 14 bzw. 15 auf, die jeweils an der der Kolben-Zylindereinheit 20 gegenüberliegenden Seite der Lamellenpakete angeordnet und fest mit der Abtriebswelle 2 verbunden ist. Auf der Druckplatte 14 bzw. 15 stützen sich die axial verschiebbaren Außen- und Innenlamellen der beiden Kupplungen 6 und 7 ab, wenn die dazugehörige Kupplung 6, 7 geschlossen wird und die Lamellen zu diesem Zweck durch die Kolben-Zylindereinheit 20 gegeneinander gedrückt werden.

Die Kolben-Zylindereinheit 20 weist einen axial zu der Abtriebswelle 2 verschiebbaren Ringzylinder 22 auf, welcher aus einem Zylindermantel 23 und aus zwei Zylinderdeckeln 24 und 25 besteht, die starr mit dem Zylindermantel 23 verbunden sind. Innerhalb des Ringzylinders 22 ist ein Kolben in Form eines Ringkolbens 21 angeordnet, der über eine Buchse 18 starr mit der Abtriebswelle 2 verbunden ist. Somit ist der Ringzylinder 22 axial verschiebbar gegenüber dem Ringkolben 21 und der Abtriebswelle 2 angeordnet. Zur Sicherung der drehfesten Verbindung ist in die Abtriebswelle 2 eine Passfeder 19 eingefügt, die in entsprechende Passfedernuten der Buchse 18 und der Lamellenringe 10 und 11 eingreift.

Der verschiebbare Ringzylinder 22 wird dauernd durch eine Druckfeder 26 beaufschlagt, die sich an dem Ringkolben 21 abstützt und den Ringzylinder 22 in Richtung der ersten Kupplung 6 drückt. Auf der der zweiten Kupplung 7 zugewandten Seite des Ringkolbens 21 befindet sich ein mit einem Druckmittel beaufschlagbarer Druckraum 27. Bei Druckmittelbeaufschlagung dieses Druckraumes 27 wird der Ringzylinder 22 in Richtung der zweiten Kupplung 7 gedrückt. Das von einer nicht dargestellten Druckmittelquelle bereitgestellte Druckmittel wird dem Druckraum 27 durch einen Druckmittelkanal 31 zugeführt, der durch die Abtriebswelle 2 und die Buchse 18 bis zum Druckraum 27 führt. Die Druckmittelzufuhr wird über nicht dargestellte Steuerventile gesteuert, die beispielsweise mit einer elektronischen Steuerungseinheit signalübertragend verbunden sind. Der ringförmige Druckraum 27 wird am inneren Umfang durch die Buchse 18 begrenzt, auf der der Zylinderdeckel 25 druckmitteldicht und axial verschiebbar gelagert ist. Am äußeren Umfang wird der Druckraum 27 durch den Zylindermantel 23 und seitlich durch den Zylinderdeckel 25 und den Kolben 21 begrenzt.

Im Folgenden ist die Funktion der Kupplungsanordnung beschrieben. Beide Losräder 4 und 5 sind dauernd über einen nicht dargestellten Antriebsstrang mit einem Antriebsmotor wirkverbunden. Solange der Druckraum 27 nicht mit Druckluft beaufschlagt ist, wird der Ringzylinder 22 von der Druckfeder 26 soweit in Richtung der ersten Kupplung 6 gedrückt, bis die erste Kupplung 6 geschlossen ist. Der Ringzylinder 22 befindet sich damit in einer ersten Endstellung. Dabei werden die axial beweglichen Außenlamellen 8 gegen die Innenlamellen des Lamellenringes 10 gedrückt, sodass ein Reibschluss zwischen den Lamellen entsteht und sich die Außenlamellen 8 und der Lamellenring 10 mit den Innenlamellen nicht mehr gegeneinander verdrehen. Damit ist ein Kraftfluss vom Antriebsmotor über das erste Losrad 4 zu der Abtriebswelle 2 und weiter zu der betreffenden Walze hergestellt.

Sobald der Druckraum 27 über den Druckmittelkanal 31 mit Druckluft beaufschlagt wird und der Druck im Druckraum 27 so groß ist, dass die Druckkraft auf den Ringzylinder 22 größer ist als die Federkraft durch die Druckfeder 26, bewegt sich der Ringzylinder 22 aus seiner ersten Endstellung in Richtung der zweiten Endstellung in der der Ringzylinder 22 gegen die zweiten Kupplung 7 gedrückt wird, sodass die zweite Kupplung 7 geschlossen wird. Dabei werden die Außenlamellen 9 gegen die Innenlamellen des Lamellenringes 11 gedrückt, sodass ein Reibschluss entsteht und sich die Außenlamellen 9 nicht mehr gegenüber dem Lamellenring 11 verdrehen können. Damit ist ein Kraftfluss vom Antriebsmotor über das zweite Losrad 5 zu der Abtriebswelle 2 und weiter zu der betreffenden Walze hergestellt.

Wie eingangs dieser Schrift erläutert, weist eine derartige Kupplungsanordnung nur zwei Schaltstellungen auf, nämlich eine erste, in der der Ringzylinder von der Druckfeder 26 in der ersten Endstellung gehalten wird und eine zweite Schaltstellung, in der der Ringzylinder 22 durch die Druckbeaufschlagung in der zweiten Endstellung gehalten wird. In beiden Schaltstellungen ist ein Kraftfluss von dem antriebsseitigen Antriebsstrang zur abtriebsseitigen Walze hergestellt.

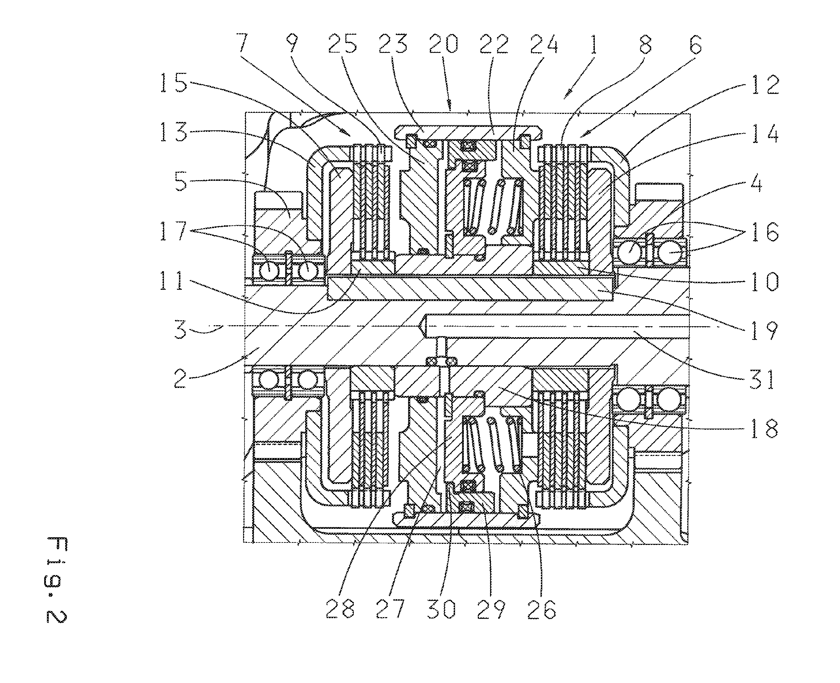

Die erfindungsgemäße in Fig. 2 dargestellte Kupplungsanordnung 1 ermöglicht dagegen drei Schaltstellungen, obwohl der Aufbau der Kupplungsanordnung 1 in vielen Teilen dem Aufbau der oben beschriebenen Kupplungsanordnung gleicht. Deshalb gibt es viele Gleichteile und es wird kein zusätzlicher Bauraum benötigt für die erfindungsgemäße Kupplungsanordnung.

Wegen des ähnlichen Aufbaus sind gleiche Teile in allen Figuren dieser Schrift mit dem gleichen Bezugszeichen versehen und im Folgenden nur die Bauteile und Funktionen näher beschrieben, die von dem oben beschriebenen Ausführungsbeispiel aus dem Stand der Technik abweichen.

Die in Fig. 2 dargestellte erfindungsgemäße Kupplungsanordnung 1 unterscheidet sich im Wesentlichen von der bekannten Anordnung gemäß Fig. 1 durch den Aufbau des Kolbens. Der Kolben ist erfindungsgemäß als Stufenkolben aufgebaut und umfasst neben dem fest mit der Abtriebswelle 2 verbundenen Festkolben 28 auch einen axial verschiebbaren Schleppkolben 29. Der Schleppkolben 29 ist axial sowohl gegenüber dem Festkolben 28 und der Abtriebswelle 2, als auch gegenüber dem Ringzylinder 22 verschiebbar. Der axiale Verschiebeweg des Schleppkolbens 29 wird gegenüber dem Ringzylinder 22 durch dessen Deckel 24 und 25 begrenzt und gegenüber dem Festkolben 28 durch einen mechanischen Anschlag 30 am Schleppkolben 29. Der Stufenkolben ist also mehrteilig aufgebaut und löst abhängig von der Höhe des Betätigungsdruckes z.B. eines Betätigungsmittels und einer Feder mehrere, durch die Geometrie der Bauteile vorbestimmte Betätigungshübe aus. Jeder Betätigungshub entspricht einer bestimmten Schaltstellung der Kupplungsanordnung.

Im drucklosen Zustand wird der Ringzylinder 22 von der Feder 26 in Richtung der ersten Kupplung 6 in die erste Schaltstellung gedrückt und dort gehalten, sodass die erste Kupplung 6 geschlossen ist und eine Drehmomentübertragung vom antriebsseitigen Antriebsstrang über das erste Losrad 4 auf die Abtriebswelle 2 erfolgt. Diese erste Schaltstellung wird solange gehalten, wie der Druck im Druckraum 27 unterhalb eines unteren Schwellenwertes liegt.

Eine zweite Schaltstellung liegt vor, wenn der Zylinder in einer zweiten Endstellung steht. Dies geschieht dann, wenn die Kupplungsanordnung mit hohem Druck oberhalb eines oberen Schwellenwertes beaufschlagt wird, sodass der Ringzylinder 22 von dem im Druckraum 27 aufgebauten Druck ganz in Richtung der zweiten Kupplung 7 gedrückt wird. Dabei wird der Schleppkolben 29 gegenüber dem Festkolben 28 in axialer Richtung verschoben. In dieser zweiten Schaltstellung ist die zweite Kupplung 7 geschlossen und es erfolgt eine Drehmomentübertragung vom antriebsseitigen Antriebsstrang über das zweite Losrad 4 auf die Abtriebswelle 2. Die zweite Schaltstellung wird eingestellt und gehalten, wenn der Druck im Druckraum 27 oberhalb eines oberen Schwellenwertes liegt.

Schließlich ergibt sich eine dritte Schaltstellung, wenn der Druck im Druckraum zwischen dem unteren und dem oberen Schwellenwert liegt. Dabei ist der Druck so hoch, dass die Federkraft der Druckfeder 26 überwunden wird und dass der Ringzylinder 22 entgegen der Federkraft soweit von seiner ersten Endstellung in Richtung zweite Endstellung bewegt wird, bis der Zylinderdeckel 24 nach einem bestimmten Weg an dem Schleppkolben 29 ansteht. In dieser mittleren Schaltstellung ist der Druck im Druckraum 27 nur noch auf die Fläche des Festkolbens 28 wirksam, weil die Wirkung des Druckes auf die Fläche des Schleppkolbens 29 durch den anstehenden Zylinderdeckel 24 auf der dem Druckraum gegenüberliegenden Seite aufgehoben wird. Deshalb bleibt der Ringzylinder 22 zunächst bei einem Druck oberhalb des unteren Schwellendruckes in der mittleren Stellung, der dritten Schaltstellung stehen. In dieser dritten Schaltstellung sind die beiden Kupplungen 6 und 7 geöffnet und es wird kein Drehmoment vom Antriebsstrang auf die Abtriebswelle 2 übertragen.

Bei weiter steigendem Druck im Druckraum 27 bewegt der Ringzylinder 22 den Schleppkolben 29 ab einem oberen Schwellenwert mit, in Richtung der zweiten Endstellung. Solange der Druck im Druckraum 27 oberhalb des oberen Schwellenwertes gehalten wird, steht die Kupplungsanordnung in der zweiten Schaltstellung, die der zweiten Endstellung des Ringzylinders 22 entspricht.

Der obere und der untere Schwellenwert des Druckes für die Mittelstellung werden im Wesentlichen durch die Federsteifigkeit und die Geometrie des Schleppkolbens bestimmt.

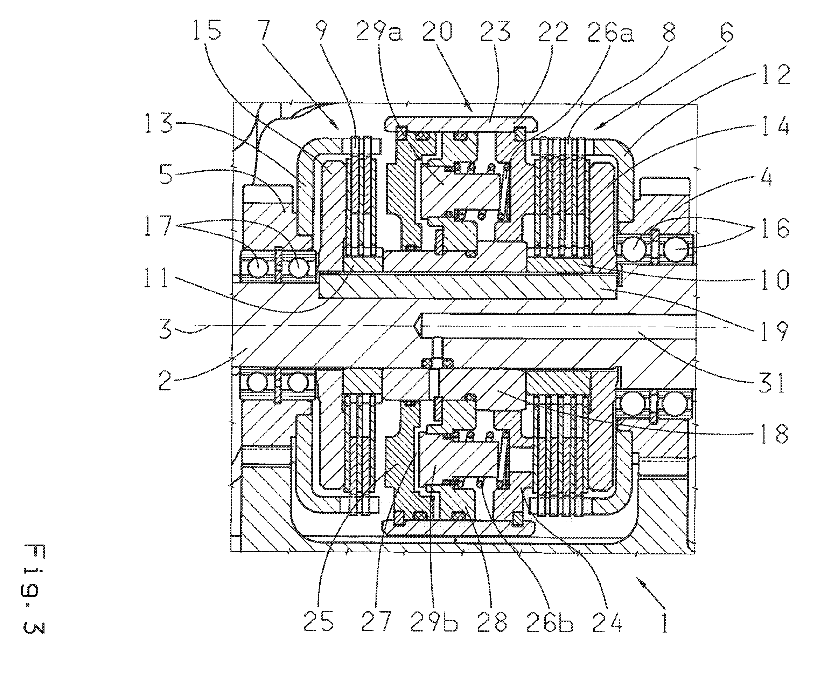

Die Fig. 3 zeigt eine weitere Ausführungsform der Erfindung. Diese unterscheidet sich von der in Fig. 2 dargestellten Ausführungsform nur durch die Art des Stufenkolbens. Gemäß Fig. 3 kann der Stufenkolben aus dem Festkolben 28 und aus mehreren einzelnen, über den Umfang des Festkolbens verteilt angeordneten Einzelschleppkolben 29a, 29b bestehen. Anstatt der einzelnen Druckfeder 26 in Fig. 2 ist in diesem Ausführungsbeispiel jedem Einzelschleppkolben 29a, 29b auch eine Einzeldruckfeder 26a, 26b zugeordnet, welche zusammen die gleiche Funktion ausüben, wie die einzige Druckfeder 26 in dem oben beschriebenen Ausführungsbeispiel. Neben den in der Fig. 3 sichtbaren beiden Einzelschleppkolben 29a und 29b können auch weitere Einzelschleppkolben an dem Festkolben 28 angeordnet sein.

Die Funktion des Ausführungsbeispiels gemäß Fig. 3 ist die gleiche, wie oben beschrieben. Ausgehend vom drucklosen Zustand der druckmittelbetätigbaren Kolben-Zylindereinheit 20 und der entsprechenden ersten Schaltstellung bewegt sich der Ringzylinder 22 bei einer Druckerhöhung über den unteren Schwellenwert entgegen der Federkraft aller Einzeldruckfedern 26a, 26b etc. in die mittlere dritte Schaltstellung, in der beide Kupplungen 6 und 7 geöffnet sind und kein Drehmoment übertragen wird. In der mittleren Schaltstellung steht der Zylinderdeckel 24 an dem einen Ende der Einzelschleppkolben 29a, 29b etc. an.

Bei einer weiteren Druckerhöhung über den oberen Schwellenwert bewegt sich der Ringzylinder 22 mitsamt den Einzelschleppkolben 29a, 29b etc. weiter in Richtung der zweiten Schaltstellung bis diese erreicht ist und bleibt dort stehen, solange der Druck in der Druckkammer 27 über dem oberen Schwellenwert bleibt. In der zweiten Schaltstellung ist die zweite Kupplung 7 geschlossen und es wird ein Drehmoment vom Antriebsstrang über das zweite Losrad 5 auf die Abtriebswelle 2 übertragen.

### Bezugszeichen

- 1: Kupplungsanordnung
- 2: Abtriebswelle
- 3: Mittelachse
- 4: erstes Losrad
- 5: zweites Losrad
- 6: erste Kupplung
- 7: zweite Kupplung
- 8: Außenlamellen
- 9: Außenlamellen
- 10: Lamellenring mit Innenlamellen
- 11: Lamellenring mit Innenlamellen
- 12: Lamellenmitnehmer
- 13: Lamellenmitnehmer
- 14: Druckplatte
- 15: Druckplatte
- 16: Wälzlager
- 17: Wälzlager
- 18: Buchse
- 19: Passfeder
- 20: Kolben-Zylindereinheit
- 21: Kolben
- 22: Ringzylinder
- 23: Zylindermantel
- 24: Zylinderdeckel
- 25: Zylinderdeckel
- 26: Druckfeder
- 26a, 26b: Einzeldruckfeder
- 27: Druckraum
- 28: Festkolben
- 29: Schleppkolben
- 29a, 29b: Einzelschleppkolben
- 30: Anschlag
- 31: Druckkanal

## Patentansprüche

1. Kupplungsanordnung (1) mit einem ersten und einem zweiten Losrad (4, 5), einer ersten und einer zweiten Kupplung (6, 7) und mit einer Abtriebswelle (2), wobei das erste und das zweite Losrad (4, 5) rotierbar um die Abtriebswelle (2) angeordnet sind, und wobei beide Kupplungen (6, 7) durch eine druckmittelbeaufschlagbare Kolben-Zylinder-Einheit (20) derart betätigbar sind, dass wahlweise jeweils eines der beiden Losräder (4, 5) drehfest mit der Abtriebswelle (2) verbindbar ist, wobei die Kolben-Zylindereinheit (20) einen Stufenkolben aufweist, wobei eine mittlere Schaltstellung einstellbar ist, bei der die Kupplungsanordnung kein Drehmoment überträgt, und dass der Kolben der Kolben-Zylinder-Einheit (20) nur einseitig druckmittelbeaufschlagbar ist, **dadurch gekennzeichnet, dass** der Stufenkolben einen axial fest mit der Abtriebswelle (2) verbundenen Festkolben (28) und einen axial verschiebbaren Schleppkolben (29) aufweist.

2. Kupplungsanordnung nach Anspruch 1, **dadurch gekennzeichnet, dass** der Zylinder (22) der Kolben-Zylindereinheit (20) axial verschiebbar gegenüber der Abtriebswelle (2) angeordnet ist.

3. Kupplungsanordnung nach Anspruch 1 oder 2, **dadurch gekennzeichnet, dass** die Kolben-Zylindereinheit (20) ringförmig ausgebildet und koaxial zur Abtriebswelle (2) angeordnet ist.

4. Kupplungsanordnung nach Anspruch 3, **dadurch gekennzeichnet, dass** der Festkolben (28) und der Schleppkolben (29) jeweils als Ringkolben ausgebildet sind.

5. Kupplungsanordnung nach Anspruch 3, **dadurch gekennzeichnet, dass** der Festkolben (28) als Ringkolben ausgebildet ist, und dass der Schleppkolben (29) aus mehreren über den Umfang des Festkolbens verteilt angeordneten separaten Einzelschleppkolben (29a, 29b) besteht.

6. Kupplungsanordnung nach einem der vorgenannten Ansprüche, **dadurch gekennzeichnet, dass** das Druckmittel der Kolben-Zylindereinheit (20) durch zumindest einen Druckmittelkanal (31) in der Abtriebswelle (2) zugeführt wird.

7. Kupplungsanordnung nach einem der vorgenannten Ansprüche, **dadurch gekennzeichnet, dass** jede Kupplung (6, 7) zumindest eine drehfest mit dem jeweils zugeordneten Losrad (4, 5) verbundene Außenlamelle (8, 9) und zumindest einen drehfest mit der Abtriebswelle (2) verbundenen Lamellenring (10, 11) mit zumindest einer daran befestigten Innenlamelle aufweist, wobei jeweils die Außenlamellen (8, 9) mit den Innenlamellen drehmomentübertragend verbindbar sind.

8. Kupplungsanordnung nach einem der vorgenannten Ansprüche, **dadurch gekennzeichnet, dass** beide Kupplungen (6, 7) als Mehrscheibenreibkupplungen ausgebildet sind.

9. Druckmaschine mit einem Feuchtwerkgetriebe, **gekennzeichnet durch** eine Kupplungsanordnung (1) nach einem der vorgenannten Ansprüche.

## Claims

1. Clutch arrangement (1) with a first and a second loose wheel (4, 5), with a first and a second clutch (6, 7) and with an output shaft (2), the first and the second loose wheel (4, 5) being arranged rotatably about the output shaft (2), and both clutches (6, 7) being actuable by means of a pressure-medium-loadable piston/cylinder unit (20) in such a way that selectively in each case one of the two loose wheels (4, 5) is connectable fixedly in terms of rotation to the output shaft (2), the piston/cylinder unit (20) having a step piston, a middle shift position being capable of being set, in which the clutch arrangement transmits no torque, and the piston of the piston/cylinder unit (20) being loadable with pressure medium on only one side, **characterized in that** the step piston has a fixed piston (28) axially connected firmly to the output shaft (2) and an axially displaceable drag piston (29).

2. Clutch arrangement according to Claim 1, **characterized in that** the cylinder (22) of the piston/cylinder unit (20) is arranged axially displaceably with respect to the output shaft (2).

3. Clutch arrangement according to Claim 1 or 2, **characterized in that** the piston/cylinder unit (20) is of annular form and is arranged coaxially with respect to the output shaft (2).

4. Clutch arrangement according to Claim 3, **characterized in that** the fixed piston (28) and the drag piston (29) are designed in each case as annular pistons.

5. Clutch arrangement according to Claim 3, **characterized in that** the fixed piston (28) is designed as an annular piston, and **in that** the drag piston (29) consists of a plurality of separate individual drag pistons (29a, 29b) arranged so as to be distributed over the circumference of the fixed piston.

6. Clutch arrangement according to one of the abovementioned claims, **characterized in that** the pressure medium of the piston/cylinder unit (20) is supplied by means of at least one pressure medium duct (31) in the output shaft (2).

7. Clutch arrangement according to one of the abovementioned claims, **characterized in that** each clutch (6, 7) has at least one outer lamella (8, 9) connected fixedly in terms of rotation to the in each case assigned loose wheel (4, 5) and at least one lamella ring (10, 11) connected fixedly in terms of rotation to the output shaft (2) and having at least one inner lamella fastened thereto, in each case the outer lamellae (8, 9) being connectable to the inner lamellae in a torque-transmitting manner.

8. Clutch arrangement according to one of the abovementioned claims, **characterized in that** the two clutches (6, 7) are designed as multiple-disc friction clutches.

9. Printing machine having a dampening unit transmission, **characterized by** a clutch arrangement (1) according to one of the abovementioned claims.

## Revendications

1. Dispositif d'accouplement (1) comprenant un premier et un deuxième pignon fou (4, 5), un premier et un deuxième embrayage (6, 7), ainsi qu'un arbre de sortie (2), le premier et le deuxième pignon fou (4, 5) étant disposés de manière à pouvoir tourner autour de l'arbre de sortie (2), et les deux embrayages (6, 7) pouvant être actionnés au moyen d'une unité piston-cylindre (20) pouvant être sollicitée par un fluide sous pression, de telle sorte que, de manière sélective, l'un des deux pignons fous (4, 5) puisse respectivement être relié de manière solidaire en rotation à l'arbre de sortie (2), l'unité piston-cylindre (20) comprenant un piston étagé, une position de commutation centrale pouvant être réglée, dans laquelle le dispositif d'accouplement ne transmet aucun couple, et le piston de l'unité piston-cylindre (20) ne pouvant être sollicité par un fluide sous pression que d'un côté, **caractérisé en ce que** le piston étagé comprend un piston fixe (28) relié fixement axialement à l'arbre de sortie (2) et un piston d'entraînement (29) déplaçable axialement.

2. Dispositif d'accouplement selon la revendication 1, **caractérisé en ce que** le cylindre (22) de l'unité piston-cylindre (20) est disposé de manière déplaçable axialement par rapport à l'arbre de sortie (2).

3. Dispositif d'accouplement selon la revendication 1 ou 2, **caractérisé en ce que** l'unité piston-cylindre (20) est réalisée sous forme annulaire et est disposée de manière coaxiale à l'arbre de sortie (2).

4. Dispositif d'accouplement selon la revendication 3, **caractérisé en ce que** le piston fixe (28) et le piston d'entraînement (29) sont réalisés respectivement sous forme de piston annulaire.

5. Dispositif d'accouplement selon la revendication 3, **caractérisé en ce que** le piston fixe (28) est réalisé sous forme de piston annulaire, et **en ce que** le piston d'entraînement (29) est constitué de plusieurs pistons d'entraînement individuels séparés (29a, 29b) disposés de manière répartie sur la périphérie du piston fixe.

6. Dispositif d'accouplement selon l'une quelconque des revendications précédentes, **caractérisé en ce que** le fluide sous pression est acheminé jusqu'à l'unité piston-cylindre (20) au moyen d'au moins un canal de fluide sous pression (31) dans l'arbre de sortie (2).

7. Dispositif d'accouplement selon l'une quelconque des revendications précédentes, **caractérisé en ce que** chaque embrayage (6, 7) comprend au moins un disque externe (8, 9) relié de manière solidaire en rotation au pignon fou (4, 5) associé respectif et au moins un anneau à disques (10, 11) relié de manière solidaire en rotation à l'arbre de sortie (2) et pourvu d'au moins un disque interne fixé à celui-ci, les disques externes (8, 9) pouvant respectivement être reliés aux disques internes de manière à transmettre un couple.

8. Dispositif d'accouplement selon l'une quelconque des revendications précédentes, **caractérisé en ce que** les deux embrayages (6, 7) sont réalisés sous forme d'embrayages à friction à disques multiples.

9. Machine à imprimer comprenant une transmission de dispositif de mouillage, **caractérisée par** un dispositif d'accouplement (1) selon l'une quelconque des revendications précédentes.
